# EUROPEAN PATENT APPLICATION

(11) **EP 4 108 146 A1**
(43) Date of publication of application: **28.12.2022**
(21) Application number: 21180726.8
(22) Date of filing: 22.06.2021
(51) Int. Cl.: A47J 43/07

(54) **TRANSFLECTIVE SPECTROSCOPIC MEASUREMENT IN BLENDER**

(71) Applicant: trinamiX GmbH, 67063 Ludwigshafen am Rhein (DE)
(72) Inventor: BRILL, Jochen, 67063 Ludwigshafen (DE); LOVRINCIC, Robert, 67063 Ludwigshafen (DE); PROELL, Florian, 67063 Ludwigshafen (DE); VALOUCH, Sebastian, 67063 Ludwigshafen (DE)
(74) Representative: Altmann Stößel Dick Patentanwälte PartG mbB

(57) **Abstract**

A blender device (110), specifically for household purposes, is proposed. The blender device (110) comprises:
- at least one container (112) configured for receiving at least one substance (118); and
- at least one actuator (114) comprising at least one moving part (140), wherein the moving part (140) is configured for performing a periodic movement for blending the substance (118) in the container (112).

Further, the blender device (110) comprises:
- at least one spectrometer device (116), wherein the spectrometer device (116) comprises at least one light source (148) and at least one optical sensor (150), wherein the spectrometer device (116) is configured for generating at least one spectrometer signal indicative of at least one optical property of the substance (118).

The moving part (140) of the actuator (114) comprises at least one reflecting portion (146). The spectrometer device (116) is arranged such that the spectrometer signal is modulated by a periodic movement of the reflecting portion (146). In a further aspect, a method of operating a blender device (110) is proposed.

## Description

### Technical Field

The invention generally relates to a blender device for blending at least one substance and a method of operating the blender device. As an example, the blender device and the method of operating the blender device may specifically be employed for household purposes such as for cooking, for baking or for preparing drinks such as smoothies. As a further example, the blender device and the method for operating the blender device may also be employed in larger-scale industrial manufacturing plants, for example in the food industry, or also in chemical reactors. However, other applications are also possible.

### Background art

A large number of blender devices, such as for example smoothie makers, are known from the prior art. The blender devices are for example used for shredding substances or mixing substances in order to produce a homogeneous blend. Specifically, a variety of different substances, which may again have different ingredients, may be shredded and mixed together.

In the following, without narrowing the scope, the invention will specifically be described with respect to household use. As an example, in case of a smoothie maker, several fruits or vegetables may be shredded and mixed, optionally also with milk or other fluids, in order to produce a homogeneously pureed juice. In such cases, the consumer may for example not be aware of the sugar content of each individual fruit or vegetable used for making the smoothie. However, the consumer may for example nevertheless be interested in the sugar content or the content of another component within the smoothie end product. Moreover, the consumer may for example be interested in a blending state, such as in a homogeneity or density of the smoothie, specifically in order to decide whether the smoothie is ready to drink or needs further blending.

EP 3 487 368 B1 discloses a food blender having an optical analysis system comprising a sensor module having a light source and a light sensor for sensing reflected light, and a reference reflector. At least one of the sensor module and the reference reflector is mounted on a rotatable blade of the food blender at the base of the vessel of the blender. This provides a best location for optical analysis since this area is clear of foam. By using the blade as a mounting for at least part of the optical analysis system, an efficient use of space is ensured.

Despite the advantages achieved by the known devices and methods, various technical challenges still remain. Specifically, a good signal-to-noise ratio must be ensured at all times. For this purpose, further optical elements are typically required. However, space is typically limited in blender devices, whereas additional components increase the constructional complexity of the device.

### Problem to be solved

It is therefore desirable to provide a blender device and a method of operating the blender device which are suited to provide precise and reliable information on the produced blend, specifically on a content of at least one component within the blend or on a blending state.

### Summary

This problem is addressed by a blender device and a method of operating the blender device with the features of the independent claims. Advantageous embodiments which might be realized in an isolated fashion or in any arbitrary combinations are listed in the dependent claims as well as throughout the specification.

Generally, as used herein, the terms "have", "comprise" or "include" or any arbitrary grammatical variations thereof are used in a non-exclusive way. Thus, these terms may both refer to a situation in which, besides the feature introduced by these terms, no further features are present in the entity described in this context and to a situation in which one or more further features are present. As an example, the expressions "A has B", "A comprises B" and "A includes B" may both refer to a situation in which, besides B, no other element is present in A (i.e. a situation in which A solely and exclusively consists of B) and to a situation in which, besides B, one or more further elements are present in entity A, such as element C, elements C and D or even further elements.

Further, it shall be noted that the terms "at least one", "one or more" or similar expressions indicating that a feature or element may be present once or more than once typically are used only once when introducing the respective feature or element. In most cases, when referring to the respective feature or element, the expressions "at least one" or "one or more" are not repeated, nonwithstanding the fact that the respective feature or element may be present once or more than once.

Further, as used herein, the terms "preferably", "more preferably", "particularly", "more particularly", "specifically", "more specifically" or similar terms are used in conjunction with optional features, without restricting alternative possibilities. Thus, features introduced by these terms are optional features and are not intended to restrict the scope of the claims in any way. The invention may, as the skilled person will recognize, be performed by using alternative features. Similarly, features introduced by "in an embodiment of the invention" or similar expressions are intended to be optional features, without any restriction regarding alternative embodiments of the invention, without any restrictions regarding the scope of the invention and without any restriction regarding the possibility of combining the features introduced in such way with other optional or non-optional features of the invention.

In a first aspect of the invention, a blender device is proposed.

The term "blend" as used herein is a broad term and is to be given its ordinary and customary meaning to a person of ordinary skill in the art and is not to be limited to a special or customized meaning. The term specifically may refer, without limitation, to at least one of mixing, homogenizing, shredding, cutting, chopping, crushing, mincing, pureeing or mashing at least one substance. Further, the term specifically may refer, without limitation, to mixing at least one substance with at least one further substance. Consequently, the term "blender device" as used herein is a broad term and is to be given its ordinary and customary meaning to a person of ordinary skill in the art and is not to be limited to a special or customized meaning. The term specifically may refer, without limitation, to an arbitrary device configured for blending at least one substance.

The blender device may specifically be used for household purposes. The term "household purpose" as used herein is a broad term and is to be given its ordinary and customary meaning to a person of ordinary skill in the art and is not to be limited to a special or customized meaning. The term specifically may refer, without limitation, to end-consumer-oriented activities, specifically to kitchen activities happening in private homes or potentially also in restaurants, in hotels or in kitchens at work spaces. More specifically, the term may refer to at least one of cooking, baking or preparing drinks, e.g. smoothies.

The blender device comprises at least one container configured for receiving at least one substance. The term "substance" as used herein is a broad term and is to be given its ordinary and customary meaning to a person of ordinary skill in the art and is not to be limited to a special or customized meaning. The term specifically may refer, without limitation, to a raw material or intermediate product, such as a food product or a raw or intermediate material for industrial purposes. The substance may comprise at least one of a liquid and a solid, e.g. a powder. The substance may comprise a suspension or an emulsion. The substance may have characteristic properties, specifically characteristic optical properties such as absorption properties. The characteristic properties may depend on the chemical composition of the substance.

The term "receiving" as used herein is a broad term and is to be given its ordinary and customary meaning to a person of ordinary skill in the art and is not to be limited to a special or customized meaning. The term specifically may refer, without limitation, to the fact that at least one substance may be filled in an object, so that the object may hold the substance. The substance may then specifically be prevented from escaping the object which is receiving it. The term "container" as used herein is a broad term and is to be given its ordinary and customary meaning to a person of ordinary skill in the art and is not to be limited to a special or customized meaning. The term specifically may refer, without limitation, to an object configured for receiving at least one substance. The container, as an example, may comprise a pot, a bowl or another device having at least one wall fully or partially enclosing at least one inner space configured for receiving the at least one substance to be blended. The container may comprise an at least mainly cylindrical geometric base body. The container may be fully or partially made of an inert and mechanically robust material, e.g. stainless steel, tempered glass or hard plastic. The container may comprise at least one opening through which it may receive the at least one substance, wherein the opening may specifically be sealable. The container may be fixedly integrated into the blender device as an integral part or may be a removable part of the blender device which may be separated from one or more other components of the blender device. Thus, the container may be put in the blender device for a blending process and may be removed from of the blender device after completion of the blending process.

The blender device comprises at least one actuator. The term "actuator" as used herein is a broad term and is to be given its ordinary and customary meaning to a person of ordinary skill in the art and is not to be limited to a special or customized meaning. The term specifically may refer, without limitation, to device or a system which is configured for exerting at least one force and/or at least one action onto at least one element or object, specifically onto the at least one substance in the container, and/or which is configured for changing at least one property of the element or object. The actuator may specifically be or may comprise at least one mechanical actuator configured for exerting at least one mechanical action onto the element or object. The at least one mechanical actuator specifically may comprise at least one motor, such as at least one electrical motor. As will be outlined in further detail below, the at least one actuator specifically may be or may comprise at least one rotating actuator, such as a rotor. The rotating actuator or rotor, as an example, may be or may comprise a mixer and/or a rotating knife, such as for one or both of stirring or cutting the substance. In addition to mechanical actuators, other types of actuators are also feasible, such as one or more of: an electrical actuator, an electromechanical actuator, an optical actuator, and optomechanical actuator. The blender device specifically may comprise at least one energy storage device, such as at least one battery and/or at least one accumulator, allowing the blender device to work without being permanently connected to an energy source. The at least one energy storage device specifically may be directly or indirectly coupled to the at least one actuator, for providing electrical energy to the at least one actuator. Additionally or alternatively, however, the blender device may also comprise at least one energy supply for connecting the blender to at least one external energy supply such as a power net.

The actuator comprises at least one moving part. The moving part is configured for performing a periodic movement for blending the substance in the container. As indicated above, the moving part may for example be a rotor driven by at least one driving element of the actuator, such as a motor, specifically an electric motor. As an example, the rotor may comprise one or more rotating arms which are suspended in a rotatable or pivotable way about at least one axle. Additionally, or alternatively, the at least one moving part configured for performing the periodic movement may also be or may comprise at least one lever arm or pendulum suspended by at least one pivot. Other options are feasible. The periodic movement may be a periodic movement with a single and constant frequency. As an example, the moving part may perform one or more of a circular movement at a constant angular frequency, an oscillating movement having a constant oscillation frequency or the like. Alternatively, however, the periodic movement may also be a periodic movement having a frequency spectrum having a plurality of frequencies and/or may have a frequency changing with time.

The blender device comprises at least one spectrometer device. The term "spectrometer device" as used herein is a broad term and is to be given its ordinary and customary meaning to a person of ordinary skill in the art and is not to be limited to a special or customized meaning. The term specifically may refer, without limitation, to an arbitrary device configured for determining at least one optical property of a sample, such as at least one spectral property. Specifically, the spectrometer device may be configured for measuring at least one of a reflection, an absorption and a transmission of light in at least one spectral range and/or of light having at least one wavelength. Specifically, the spectrometer device may be configured for measuring a distribution of light intensities for individual light wavelengths, specifically over a wavelength interval. The spectrometer may be configured for measuring in a spectrally resolving fashion, by using one or more wavelength-separating devices and/or wavelength-selective devices, such as a filter, a grating, a prism or the like. The spectrometer device may be or may comprise a grating spectrometer or a fourier-transform infrared (FTIR) spectrometer. Thus, the spectrometer device may comprise at least one optical component, such as at least one of a grating, a prism, a beam splitter, a lens, an aperture or a mirror, specifically a movable mirror. The spectrometer device may further comprise a cooling system.

The spectrometer device comprises at least one light source. The term "light" as used herein is a broad term and is to be given its ordinary and customary meaning to a person of ordinary skill in the art and is not to be limited to a special or customized meaning. The term specifically may refer, without limitation, to electromagnetic radiation in the wavelength range of 10 nm to 1 mm. Specifically, the light source may be configured for emitting light of at least one wavelength or in at least one spectral range in the visible and/or infrared spectral range, specifically in the near infrared spectral range. Therein, the spectral range of 380 nm to 760 nm may be referred to as the visible spectral range, wherein the wavelength range of light having wavelengths below this visible spectral range may be referred to as the ultraviolet spectral range, and wherein the wavelength range of light having wavelengths above the visible spectral range may be referred to as infrared spectral range. Therein, the spectral range of 760 nm to 1.4 µm may be referred to as the near infrared (NIR) spectral range. The term "light source" is a broad term and is to be given its ordinary and customary meaning to a person of ordinary skill in the art and is not to be limited to a special or customized meaning. The term specifically may refer, without limitation, to a device configured for emitting light. Specifically, the light source may comprise one or more of: an incandescent lamp, a light-emitting diode, a laser, an IR thermal source. The light source may be tunable with respect to a wavelength of the emitted light such as in a tunable laser.

The spectrometer device comprises at least one optical sensor. The term "optical sensor" is a broad term and is to be given its ordinary and customary meaning to a person of ordinary skill in the art and is not to be limited to a special or customized meaning. The term specifically may refer, without limitation, to an arbitrary device which is capable of qualitatively and/or quantitatively detecting light. Thus, the device specifically may comprise at least one sensitive element which is capable of changing at least one measurable property depending on an illumination with light. The optical sensor specifically may comprise one or more of: a photodiode, a phototransistor, a photoresistor, a semiconductor sensor, a photomultiplier, a photocell, a phototube, a thermal detector, a pyroelectric detector, a thermopile, a bolometer, a Golay cell, photochemical sensor. The optical sensor may be a single optical sensor having a single, uniform sensitive element or sensitive surface, or may be an optical sensor having a plurality of sensitive elements, such as a pixelated sensor, e.g. a CCD or CMOS device. The optical sensor may be equipped with at least one optical pass filter, specifically selected from at least one of an optical short pass filer, an optical long pass filter, or an optical band pass filter. The optical pass filter may be configured for transmitting light having a wavelength within a limited wavelength range.

The spectrometer device is configured for generating at least one spectrometer signal indicative of at least one optical property of the substance. The term "spectrometer signal" as used herein is a broad term and is to be given its ordinary and customary meaning to a person of ordinary skill in the art and is not to be limited to a special or customized meaning. The term specifically may refer, without limitation, to an electrical signal generated as output by the spectrometer device based on at least one sensor signal of the at least one optical sensor. The spectrometer device may comprise at least one sensing electronics element configured for receiving at least one sensor signal of the at least one optical sensor, such as at least one analogue and/or at least one digital sensor signal. The at least one sensor signal may directly be used as the spectrometer signal and/or may be processed or preprocessed in order to form the spectrometer signal. Additionally or alternatively, the spectrometer signal may be derived by evaluating the at least one sensor signal. Thus, the at least one spectrometer signal may be or may comprise an analogue and/or a digital signal. The spectrometer device may for example generate a spectrometer signal based on a plurality of sensor signals each referring to a measured light intensity at a specific wavelength of the light.

The term "optical property" as used herein is a broad term and is to be given its ordinary and customary meaning to a person of ordinary skill in the art and is not to be limited to a special or customized meaning. The term specifically may refer, without limitation, to at least one of a qualitative and/or quantitative information on at least one of an absorption, a transmission, a reflection, a scattering or a diffraction of light on an element or an object, specifically on at least one substance within the container. Depending on the optical properties of the substance, light emitted by the light source may specifically be absorbed, transmitted, reflected, scattered or diffracted by the substance before reaching the optical sensor, which may impact the light intensities measured by the optical sensor. The optical property specifically may be wavelength-dependent, and the wavelength-dependency of the optical property, may form part of the optical property itself. Thus, as an example, at least one of the absorption, the transmission, the reflection, the scattering and the diffraction may be a function of the wavelength, and the wavelength-dependency of one or more of these optical properties may form part of the information of the forming optical property, such as a transmission and/or an absorption at a first wavelength as compared to a transmission and/or an absorption at a second wavelength.

The moving part of the actuator comprises at least one reflecting portion. The term "reflecting portion" as used herein is a broad term and is to be given its ordinary and customary meaning to a person of ordinary skill in the art and is not to be limited to a special or customized meaning. The term specifically may refer, without limitation, to an element or object having reflective properties for incident light, specifically having a high reflectivity R of at least 50% of the light produced by the light source, preferably of at least 60% and, more preferably of at least 80%. Thus, the reflecting portion may be configured for reflecting at least a large extent of an incident light intensity, e.g. 50% or more, specifically of light emitted by the light source. Due to the periodic movement of the moving part comprising the reflecting portion, the reflecting portion may specifically only temporarily reflect at least a large extent of the light emitted by the light source, i.e. when the reflecting portion is in a beam path of the light emitted by light source.

The spectrometer device is arranged such that the spectrometer signal is modulated by a periodic movement of the reflecting portion. The terms "modulating" or "modulation" as used herein are broad terms and are to be given their ordinary and customary meaning to a person of ordinary skill in the art and are not to be limited to a special or customized meaning. The terms specifically may refer, without limitation, to the process of changing, specifically periodically changing, at least one property of the light, specifically one or both of an intensity or a phase of the light. The modulation may be a full modulation from a maximum value to zero, or may be a partial modulation, from a maximum value to an intermediate value greater than zero. The spectrometer device and the moving part comprising the reflecting portion may be arranged relative to each other such that, during the movement, the reflecting portion interacts with light originating from the light source in a varying way, such as depending on an orientation and/or position of the reflecting portion. Since the moving part comprising the reflecting portion is capable of performing a periodic movement, and since the interaction of the reflecting portion with the light depends on the orientation and/or the position of the reflecting portion, light or at least a portion of the light received by the optical sensor may be modulated.

The reflecting portion may be configured for at least partially reflecting light emitted by the light source towards the optical sensor. As indicated above, the reflecting portion may reflect at least a portion of a light intensity of light emitted by the light source towards the optical sensor, specifically at least temporarily due to the periodic movement of the reflection portion. The light emitted by the light source may be directly at least partially reflected by the reflecting portion towards the optical sensor. The light emitted by the light source may be indirectly at least partially reflected by the reflecting portion towards the optical sensor, i.e. the light may be further reflected at least partially at least once by at least one further element or object, e.g. at least one substance within the container or the container itself.

The optical sensor may be configured for detecting light emitted by the light source after interaction with the substance and at least partial reflection by the reflecting portion. The reflecting portion may be configured for periodically modulating the light. The spectrometer signal may comprise a signal directly or indirectly generated by the optical sensor. For possible examples of processing or preprocessing the sensor signal of the optical sensor, reference may be made to the description given above. The term "interaction" as used herein is a broad term and is to be given its ordinary and customary meaning to a person of ordinary skill in the art and is not to be limited to a special or customized meaning. The term specifically may refer, without limitation, to a unilateral or mutual influence of at least two elements or objects on each other. In particular, the term may refer to at least one of an absorption, a transmission, a reflection, an elastic or inelastic scattering or a diffraction of light on an element or an object, specifically on at least one substance within the container. The interaction of the light with the substance may affect at least one of an intensity of the light, a frequency of the light, a wavelength of the light, a velocity of the light, a phase of the light or a polarization of the light. Specifically, the intensity of the light may be altered due to the interaction of the light with the substance, e.g. reduced due to an absorption of at least a part of an incident light beam. The interaction of the light with the substance may specifically depend on the wavelength of the light, e.g. an absorption of the light may depend on the wavelength of the light. Specifically, infrared radiation may be at least partially absorbed by the substance. At least one rotational mode and/or at least one vibrational mode of at least one molecular bond within the substance may be excited by absorbed light with a matching wavelength, specifically with a wavelength within the infrared spectral range. An excitation of the molecular bond at a specific wavelength of the light may be characteristic for a molecule and/or a chemical composition of the molecule. Consequently, a chemical composition of the substance may be derived from the interaction of the light with the substance.

The spectrometer device may be configured for at least one of: a reflective measurement; a transmissive measurement; a transflective measurement. The term "reflective measurement" as used herein is a broad term and is to be given its ordinary and customary meaning to a person of ordinary skill in the art and is not to be limited to a special or customized meaning. The term specifically may refer, without limitation, to a measurement of light, specifically of an intensity of the light, which was reflected by an element or object, specifically by at least one substance within the container. As an example, the light source may emit light, the light may then be scattered at the substance, wherein a portion of the light may be absorbed by the substance and another portion of the light may be reflected towards the reflecting portion and from there further on towards the optical sensor. Modulation through the reflecting portion may take place fully or partially before and/or during and/or after interaction of the light with the substance. Thus, the optical sensor may specifically measure a light intensity of the light reflected by the substance.

The term "transmissive measurement" as used herein is a broad term and is to be given its ordinary and customary meaning to a person of ordinary skill in the art and is not to be limited to a special or customized meaning. The term specifically may refer, without limitation, to a measurement of light, specifically of an intensity of the light, which was transmitted through an element or object, specifically through the at least one substance within the container. Light, which was transmitted through the substance, may specifically be reflected further on after interaction with the substance, specifically by the reflection portion. As an example, the light source may emit light, the light may then scatter at the substance, wherein a portion of the light may be absorbed by the substance and another portion of the light may be transmitted through the substance and afterwards reflected towards the optical sensor by the reflecting portion. Thus, the optical sensor may specifically measure a light intensity of the light transmitted through the substance, regardless of potential follow-up interaction processes such as a reflection by the reflecting portion.

The term "transflective measurement" as used herein is a broad term and is to be given its ordinary and customary meaning to a person of ordinary skill in the art and is not to be limited to a special or customized meaning. The term specifically may refer, without limitation, to a superposition or combination of a reflective and a transmissive measurement, i.e. a measurement of light, specifically of an intensity of the light, which was reflected by an element or object and/or transmitted through the element or object, specifically the at least one substance within the container. As an example, the light source may emit light, the light may then scatter at the substance, wherein a first portion of the light may be absorbed by the substance, a second portion of the light may be reflected towards the optical sensor by the substance and a third portion of the light may be transmitted through the substance, wherein the third portion may specifically afterwards be reflected towards the optical sensor by the reflecting portion. Thus, the optical sensor may specifically measure a superposition of a reflected and a transmitted light intensity.

The spectrometer device may at least partially be located outside the container, specifically in order to protect the spectrometer device and/or in view of hygiene aspects. However, the spectrometer device may also be fully or partially resistant with respect to exterior influences such as the substance within the container or the blending process taking place within the container. Thus, the spectrometer device may in principle also fully or partially be located inside the container.

The container may comprise at least one transparent portion being at least partially transparent for light generated by the light source. Thereby, the light generated by the light source may be generated outside the container and may be transmitted through the transparent portion into the container, where the interaction with the substance may take place, as well as the modulation by the reflecting portion. After the interaction with the substance and the modulation by the reflecting portion, the light may then be transmitted to the optical sensor, which may be located, again, inside or outside the container. In the latter case, as an example, the light may be transmitted, again, through the transparent portion of the container or through another transparent portion.

The transparent portion may comprise at least one window, specifically a watertight and dishwasher safe window. The term "watertight" as used herein is a broad term and is to be given its ordinary and customary meaning to a person of ordinary skill in the art and is not to be limited to a special or customized meaning. The term specifically may refer, without limitation, to a property of an element or object to sufficiently prevent the penetration of liquids, e.g. water or ethanol at room temperature. Specifically at around atmosphere pressure, the window may be almost completely watertight. The term "dishwasher safe" as used herein is a broad term and is to be given its ordinary and customary meaning to a person of ordinary skill in the art and is not to be limited to a special or customized meaning. The term specifically may refer, without limitation, to the fact that an element or object may be cleaned by a dishwasher without showing visible signs of damage after at least 100 cycles of dishwashing in a dishwasher.

Transparent portion may be located in a in a bottom part of the container. The term "bottom part" as used herein is a broad term and is to be given its ordinary and customary meaning to a person of ordinary skill in the art and is not to be limited to a special or customized meaning. The term specifically may refer, without limitation, to a distal end of an object, which carries the rest of the object. The bottom part of the container, specifically, may be essentially flat, such as by providing a flat disk for placement of the container on a flat working surface such as a kitchen table. The bottom part of the container may for example carry at least one side wall of the container. The bottom part may be positioned opposite of an opening of the container, specifically a sealable opening. The container may specifically be placed within the blender device with the bottom part facing downward.

The container may comprise a container axis, wherein the transparent portion may be located off-centered with respect to the container axis. The term "container axis" as used herein is a broad term and is to be given its ordinary and customary meaning to a person of ordinary skill in the art and is not to be limited to a special or customized meaning. The term specifically may refer, without limitation, to symmetry axis of the container, wherein the container may specifically be rotationally symmetric with respect to the symmetry axis. As an example, the container may comprise the shape of a cylinder and the container axis may consequently refer to a central cylinder axis extending over the height of the cylinder. Consequently, the term "off-centered with respect to the container axis" as used herein is a broad term and is to be given its ordinary and customary meaning to a person of ordinary skill in the art and is not to be limited to a special or customized meaning. The term specifically may refer, without limitation, to a point, an area or a volume which does not intersect the container axis. The point, the area or the volume may, however, specifically be in close distance to the container axis. The spectrometer device may be placed underneath the container, specifically off-centered with respect to a container axis of the container. Thus, the bottom part of the container may specifically be placed on top of the spectrometer device within the blender device.

A direct light path between the light source and the optical sensor may be blocked by at least one blocking element of the blender device, such that the light emitted by the light source, for reaching the optical sensor, has to be reflected by the reflecting portion in order to reach the optical sensor. The optical setup of the robotic device, including the light source and the optical sensor, specifically may be configured such that a direct propagation of light from the light source to the optical sensor is prevented. In other words, the optical setup may be such that the light source is not directly visible from the location of the optical sensor. In case a plurality of optical detectors is provided in the robotic device, this setup may be given for one or more of the optical detectors. Preventing a direct illumination of the optical sensor by the light source may specifically ensure that the light has to be reflected or scattered at least once before reaching the at least one optical sensor. Thereby, generally, a signal-to-noise ratio may be increased and/or a background signal may be reduced.

The spectrometer signal comprises at least one of: an absorption signal of an absorption of light of at least one wavelength by the substance; a transmission signal of a transmission of light of at least one wavelength by the substance; an absorption spectrum of the substance over at least one wavelength range; a transmission spectrum of the substance over at least one wavelength range; an optical signal indicative of a ratio of absorption of light of at least two different wavelengths by the substance; an optical signal indicative of a ratio of transmission of light of at least two different wavelengths by the substance.

The term "spectrum" as used herein is a broad term and is to be given its ordinary and customary meaning to a person of ordinary skill in the art and is not to be limited to a special or customized meaning. The term specifically may refer, without limitation, to a continuous or discontinuous distribution function of a first physical quantity over a second physical quantity, specifically a distribution of an intensity of a signal over a wavelength, a wavenumber, an energy or a frequency of the signal. Thus, as an example, the spectrum may comprise a plurality of measurement values as a function of at least one of a wavelength, a wave number, and energy and a frequency, specifically of the light for which the measurement values are gained. The spectrum may be a continuous or a discontinuous spectrum over at least one wavelength range and/or for at least two different wavelengths, wavenumbers, frequencies or energies. The signal may specifically be at least one of an optical or an electrical signal. The spectrum may be continuous. As an example, the spectrum may refer to a distribution of a light intensity over a continuous wavelength range. The spectrum may also be discontinuous. As an example, the spectrum may refer to a distribution of a light intensity over at least one discrete wavelength and at least one further wavelength range.

Consequently, the term "transmission spectrum" as used herein is a broad term and is to be given its ordinary and customary meaning to a person of ordinary skill in the art and is not to be limited to a special or customized meaning. The term specifically may refer, without limitation, to a spectrum of light which was transmitted through an element or object, specifically to a distribution of a transmitted light intensity over a wavelength range. Specifically, the transmission spectrum may refer to a distribution of light intensities transmitted through the substance within the container over corresponding light wavelengths. As indicated above, the light transmitted through the substance may be subject to further scattering, specifically to reflection by the reflecting portion.

Analogously, the term "absorption spectrum" as used herein is a broad term and is to be given its ordinary and customary meaning to a person of ordinary skill in the art and is not to be limited to a special or customized meaning. The term specifically may refer, without limitation, to a spectrum of light which was absorbed by an element or object, specifically to a distribution of a absorbed light intensity over a wavelength range. Specifically, the absorption spectrum may refer to a distribution of light intensities absorbed by the substance within the container over corresponding light wavelengths. The absorption spectrum may specifically be derived from a transmission spectrum, wherein it may be assumed that a light intensity, which is not transmitted through the substance, is absorbed by the substance. As indicated above, absorbed light may induce characteristic excitations of the substance allowing for an investigation of a chemical composition of the substance. Thus, form the absorption spectrum, a chemical composition of the substance may be derived. Specifically, peaks in the absorption spectrum may indicate the presence of a specific species such as a specific atom with a specific electron configuration or a specific molecule in a specific molecular orbital.

The spectrometer device may be configured for measuring at least one spectrum of the substance by using the light source and the optical sensor, wherein the spectrometer device is further configured for generating the at least one spectrometer signal in correspondence with the measured spectrum. The spectrum may specifically comprise at least one of an absorption spectrum or a transmission spectrum. Thus, the light source may emit light at at least one wavelength, the light may then be scattered at the substance, wherein at least a part of an incident light intensity may be absorbed by the substance, wherein a remaining light intensity may be detected by the optical sensor. The optical sensor may consequently generate at least one corresponding sensor signal, specifically an electrical sensor signal. Finally, at least one sensor signal may be used by the spectrometer device in order to generate at least one spectrometer signal in correspondence with the measured spectrum, specifically an electrical spectrometer signal.

The blender device may further comprise at least one evaluation device configured for evaluating the spectrometer signal and for determining at least one item of information on at least one property of the substance. The term "evaluation device" as used herein is a broad term and is to be given its ordinary and customary meaning to a person of ordinary skill in the art and is not to be limited to a special or customized meaning. The term specifically may refer, without limitation, to an arbitrary device being configured for analyzing and/or interpreting data. The evaluation device may be or may comprise one or more integrated circuits, in particular at least one of an application-specific integrated circuit (ASIC), and/or a data processing device, in particular at least one of a digital signal processor (DSP), a field programmable gate arrays (FPGA), a microcontroller, a microcomputer, or a computer. Alternatively or in addition, the evaluation device may, particularly, be or be comprised by at least one electronic communication unit, specifically a smartphone or a tablet. Additional components may be feasible, in particular one or more preprocessing devices and/or data acquisition devices, in particular one or more devices for receiving and/or preprocessing of the detector signals, in particular one or more AD-converters and/or one or more filters. Further, the evaluation device may comprise one or more data storage devices, in particular for storing at least one electronic table, in particular at least one look-up table. Further, the evaluation device may comprise one or more interfaces, in particular one or more wireless interfaces and/or one or more wire-bound interfaces.

The evaluation device may be configured to execute and/or perform at least one computer program, in particular at least one computer program performing or supporting the step of generating the item of information. By way of example, one or more algorithms may be implemented which, by using the spectrometer signal as at least one input variable, may perform a transformation to the item of information. For this purpose, the evaluation device may, particularly, comprise at least one data processing device, in particular an electronic data processing device, which can be configured to generate the item of information by evaluating the at least one detector signal. Thus, the evaluation device may be configured to use the spectrometer signal as an input variable and to generate the item of information by processing the input variable. The processing may be done in parallel, subsequently or even in a combined manner. The evaluation device may use an arbitrary process for generating the item information, in particular by calculation and/or using at least one stored and/or known relationship.

The term "item of information" as used herein is a broad term and is to be given its ordinary and customary meaning to a person of ordinary skill in the art and is not to be limited to a special or customized meaning. The term specifically may refer, without limitation, to at least one of data, knowledge or evidence providing a qualitative and/or quantitative description of at least one entity, such as on a physical property of an element or object, specifically of the at least one substance to be blended, e.g. before, during or after blending. The item of information specifically may be selected from the group consisting of: a content of at least one component of the substance, specifically a content selected from the group consisting of a water content, a sugar content and a nutrient content; a blending state of the substance, specifically a homogeneity of the substance; a density of the substance; a color of the substance. The term "component" as used herein is a broad term and is to be given its ordinary and customary meaning to a person of ordinary skill in the art and is not to be limited to a special or customized meaning. The term specifically may refer, without limitation, to at least one of a chemical element, a chemical molecule, a chemical compound or a chemical complex. The components of the substance may define the chemical composition of the substance.

The term "blending state" as used herein is a broad term and is to be given its ordinary and customary meaning to a person of ordinary skill in the art and is not to be limited to a special or customized meaning. The term specifically may refer, without limitation, to a present status of at least one substance within a blending process. As an example, at the beginning of the blending process at least two substances, such as at least two chemically different substances, may be embodied as at least two separate entities and/or inhomogeneous mixtures, such as large and separate bodies. During the blending process the at least two substances may then progressively be shredded and/or mixed with each other, so that, finally, a blend with uniform chemical composition, density and/or color may be reached. The term "homogeneity" as used herein is a broad term and is to be given its ordinary and customary meaning to a person of ordinary skill in the art and is not to be limited to a special or customized meaning. The term specifically may refer, without limitation, to a uniformity of the substance, specifically to a uniformity of a chemical composition of the substance. The homogeneity of the substance may be increased during a blending process in the blender device. Specifically, at the end of the blending process, a homogeneous end product may be provided, e.g. with a uniform chemical composition, at least on a macroscopic scale.

The evaluation device may be configured for taking the modulation of the spectrometer signal into account for determining the item of information. The evaluation device may be configured for at least one of: a frequency filtering of the spectrometer signal; a lock-in measurement using the spectrometer signal, specifically a lock-in measurement using the spectrometer signal and a frequency of at least one of the periodic movement of the moving part and the periodic movement of the reflecting portion. Taking into account the modulation may take place in various ways, as the skilled person in the field of optical measurements generally will appreciate. Thus, as an example, filter techniques may be used, in order to select measurement signals in a frequency range around the modulation frequency of the modulation and/or in order to disregard measurement signals in a frequency range around the modulation frequency. As an example, background light and/or noise may fully or partially be eliminated or at least suppressed by using a bandpass-filter with the modulation frequency being located within a transmission range of the bandpass-filter, whereas measurement signals having other frequencies, including noise and background light, are suppressed. Additionally, or alternatively, specifically in case the modulation frequency of the modulation is known and is available as a separate periodic signal such as a sinusoidal electrical signal, lock-in techniques may be used, as the skilled person will know. Thus, the periodic signal may be mixed with the spectrometer signal, and the mixed-signal may be filtered by using at least one low-pass filter. Other techniques taking into account the periodic modulation of the light are generally known and may be used here. These techniques may comprise electronic techniques and/or may comprise optical techniques. The evaluation may fully or partially be performed by using electronic components and/or may fully or partially be performed by using software evaluation.

The blender device may be configured for controlling a blending process of the substance by using the item of information on the at least one property of the substance. The blender device may be configured for at least one of: controlling an intensity, specifically a frequency, of the blending process in accordance with the item of information; stopping the blending process when the item of information reaches a predetermined value.

The moving part may comprise at least one rotating part, wherein the periodic movement of the moving part may be a rotating movement. The moving part may comprise at least one of: a knife element, a whisk, a dough hook. The term "knife element" as used herein is a broad term and is to be given its ordinary and customary meaning to a person of ordinary skill in the art and is not to be limited to a special or customized meaning. The term specifically may refer, without limitation, to an arbitrary device with at least one blade or cutting edge. Apart from this, the knife element may have an arbitrary physical shape, e.g. the shape of a cutter head as used in common blenders. The knife element may specifically be configured for cutting an element or object with high speed.

The moving part may be at least partially located in at least one light path of light emitted by the light source, specifically of at least one light beam emitted by the light source and directly or indirectly directed to the optical sensor. Thus, the light path may be or may comprise a straight light path and/or may be or may comprise at least one folded light path having one or more reflection points, specifically the rotating portion as outlined above.

The spectrometer device may further be configured for measuring at least one reference signal. The term "reference signal" as used herein is a broad term and is to be given its ordinary and customary meaning to a person of ordinary skill in the art and is not to be limited to a special or customized meaning. The term specifically may refer, without limitation, to an optical or electrical signal which is suitable for comparison purposes with respect to a measured signal. Thus, a comparison of the measured signal with the reference signal may specifically facilitate further processing and/or evaluating of the measured signal. Specifically, a difference between the measured signal and the reference signal may be used for further processing and/or evaluating of the measured signal. The reference signal may be selected from the group consisting of: a dark signal, specifically a dark signal generated by using sensor signals of the optical sensor during periods of no reflection or no direct reflection of light from the reflecting portion towards the optical sensor; a reference signal generated by detecting light emitted by the light source without interaction of the light with the substance; a reference signal generated by detecting light emitted by the light source and being scattered and/or reflected by the substance; a background signal. As an example, the light source may emit light, wherein the reference signal may be branched of the light, e.g. by using a beam splitter, and wherein the reference signal may be directed towards the optical sensor without further interaction with the substance.

The moving part may comprise at least one reflecting surface which acts as the reflecting portion. The moving part may further comprise at least one mechanical transmission for further adapting the movement of the reflecting portion. The term "mechanical transmission" as used herein is a broad term and is to be given its ordinary and customary meaning to a person of ordinary skill in the art and is not to be limited to a special or customized meaning. The term specifically may refer, without limitation, to a mechanical device configured for converting at least one first value of a physical quantity into at least one second value of the physical quantity. The mechanical transmission may specifically comprise at least one of a gear train or a belt drive. The mechanical transmission may adjust a speed, specifically a rotating speed, of the moving part before transferring it to the reflecting portion.

A minimum spatial distance between the reflecting portion and the spectrometer device, specifically the light source and/or the optical sensor, may be 1 mm to 400 mm, specifically 3 mm to 100 mm, more specifically 5 mm to 50 mm. As outlined above, the reflecting portion, which is comprised by the moving part, is subject to a periodic movement. Thus, a distance between the reflection portion and the spectrometer device may vary over time. However, a minimum spatial distance may nevertheless be kept between the reflecting portion an the spectrometer device. Thus, no part of the reflecting portion may at any point in time be located closer to any point of the spectrometer device than specified through the minimum spatial distance between both.

The blender device may be configured for performing at least one calibration process by using light emitted by the light source and modulated by the reflecting portion. Thus, as an example, the light source may be used for calibrating the at least one optical sensor. The optical sensor, generally, besides detecting light emitted by the light source, may also be used for other purposes, such as for detecting ambient light. By calibrating the optical sensor by using the light source, a quantitative detection of the ambient light may be performed. The calibration process may be performed by using the modulated light. The calibration process may comprise one or more of: a background calibration; a spectral calibration; an intensity calibration; a dark noise calibration.

The blender device may comprise at least one controller for controlling at least one of the spectrometer device and the actuator and optionally the evaluation device. The term "controller" as used herein is a broad term and is to be given its ordinary and customary meaning to a person of ordinary skill in the art and is not to be limited to a special or customized meaning. The term specifically may refer, without limitation, to an arbitrary electronic device configured for controlling one or more operations of the robotic device. The controller specifically may be programmable. Thus, the controller specifically may comprise at least one processor. The term "processor" as used herein is a broad term and is to be given its ordinary and customary meaning to a person of ordinary skill in the art and is not to be limited to a special or customized meaning. The term specifically may refer, without limitation, to an arbitrary logic circuitry configured for performing basic operations of a computer or system, and/or, generally, to a device which is configured for performing calculations or logic operations. In particular, the processor may be configured for processing basic instructions that drive the computer or system. As an example, the processor may comprise at least one arithmetic logic unit (ALU), at least one floating-point unit (FPU), such as a math coprocessor or a numeric coprocessor, a plurality of registers, specifically registers configured for supplying operands to the ALU and storing results of operations, and a memory, such as an L1 and L2 cache memory. In particular, the processor may be a multi-core processor. Specifically, the processor may be or may comprise a central processing unit (CPU). Additionally or alternatively, the processor may be or may comprise a microprocessor, thus specifically the processor's elements may be contained in one single integrated circuitry (IC) chip. Additionally or alternatively, the processor may be or may comprise one or more application-specific integrated circuits (ASICs) and/or one or more field-programmable gate arrays (FPGAs) or the like.

The processor specifically may be configured, such as by software programming, for performing and/or supporting performing of at least one task. In addition, the processor specifically may be configured, such as by software programming, for performing and/or supporting at least one optical measurement by using the at least one light source and the at least one optical sensor.

In a further aspect of the present invention, a method of operating the blender device according to any one of the embodiments disclosed above and/or according to any one of the embodiments disclosed in further detail below. The method comprises the following method steps:
i. filling at least one substance to be blended in the container of the blender device;
ii. emitting light by using the light source of the spectrometer device;
iii. modulating the light emitted by the light source through the periodic movement of the moving part by using the reflecting portion;
iv. receiving the modulated light by using the optical sensor of the spectrometer device; and
v. generating at least one spectrometer signal indicative of at least one optical property of the substance.

The method steps may be performed in the given order. It shall be noted, however, that a different order is also possible. Further, one or more of the method steps may be performed once or repeatedly. Further, two or more of the method steps may be performed simultaneously or in a timely overlapping fashion. The method may comprise further method steps which are not listed.

The method may be computer-implemented. Referring to the computer-implemented aspects of the invention, one or more of the method steps or even all of the method steps of the method according to one or more of the embodiments disclosed herein may be performed by using a computer or computer network. Thus, generally, any of the method steps including provision and/or manipulation of data may be performed by using a computer or computer network. Generally, these method steps may include any of the method steps, typically except for method steps requiring manual work.

The devices and methods according to the present invention may provide a large number of advantages over known devices and methods. In particular, they allow for blending substances while simultaneously characterizing the substances and the blend as a whole. The spectroscopic measurements presented here for this purpose do not affect or change the substances and are thus for example well suited for food processing. They further make use of the already existing structure of common blenders and thus keep the measurement setup compact. Specifically, light can be modulated a simple, efficient and robust fashion. This light modulation improves the signal-to-noise ratio and the insensitivity to ambient light during spectroscopic measurements. The moving part may be used in dual use for blending and for light modulation. Generally, only few modifications to existing systems may be necessary, in order to implement the possibility of improving spectroscopic measurements by using modulated light. Existing moving parts may be combined with one or more optical sensors and/or one or more light sources, in order to allow for spectroscopic measurements. The devices and methods according to the present invention further ensure a sufficient signal due to small distance beam paths. Besides, transflective measurements making use of the reflecting portion further improve the signal. As most of substances to be blended are liquids or emulsions, but only in rare cases solids, a purely reflective measurement usually would not yield a sufficient signal. On the other hand, a purely transmissive setup with the doubled space requirements is technically unfeasible. The present invention combines these two kinds of measurements in a simple but efficient manner in order to allow for precise and reliable spectroscopic measurements. At the same time, a sufficient blending of the substance is still ensured, specifically for optimized shapes of the moving part.

Summarizing and without excluding further possible embodiments, the following embodiments may be envisaged:
Embodiment 1: A blender device, specifically for household purposes, comprising:
   - at least one container configured for receiving at least one substance; and
   - at least one actuator comprising at least one moving part, wherein the moving part is configured for performing a periodic movement for blending the substance in the container;
      the blender device further comprising:
   - at least one spectrometer device, wherein the spectrometer device comprises at least one light source and at least one optical sensor, wherein the spectrometer device is configured for generating at least one spectrometer signal indicative of at least one optical property of the substance;
   wherein the moving part of the actuator comprises at least one reflecting portion, and wherein the spectrometer device is arranged such that the spectrometer signal is modulated by a periodic movement of the reflecting portion.
Embodiment 2: The blender device according to the preceding embodiment, wherein the reflecting portion is configured for at least partially reflecting light emitted by the light source towards the optical sensor.
Embodiment 3: The blender device according to any one of the preceding embodiments, wherein the optical sensor is configured for detecting light emitted by the light source after interaction with the substance and at least partial reflection by the reflecting portion, wherein the reflecting portion is configured for periodically modulating the light, wherein the spectrometer signal comprises a signal generated by the optical sensor.
Embodiment 4: The blender device according to any one of the preceding embodiments, wherein the spectrometer device is configured for at least one of: a reflective measurement; a transmissive measurement; a transflective measurement.
Embodiment 5: The blender device according to any one of the preceding embodiments, wherein the spectrometer device at least partially is located outside the container.
Embodiment 6: The blender device according to the preceding embodiment, wherein the container comprises at least one transparent portion being at least partially transparent for light generated by the light source.
Embodiment 7: The device according to the preceding embodiment, wherein the transparent portion comprises at least one window, specifically a watertight and dishwasher safe window.
Embodiment 8: The blender device according to any one of the two preceding embodiments, wherein the transparent portion is located in a in a bottom part of the container.
Embodiment 9: The blender device according to the preceding embodiment, wherein the container comprises a container axis, wherein the transparent portion is located off-centered with respect to the container axis.
Embodiment 10: The blender device according to any one of the five preceding embodiments, wherein the spectrometer device is placed underneath the container, specifically off-centered with respect to a container axis of the container.
Embodiment 11: The blender according to any one of the preceding embodiments, wherein a direct light path between the light source and the optical sensor is blocked by at least one blocking element of the blender device, such that the light emitted by the light source, for reaching the optical sensor, has to be reflected by the reflecting portion in order to reach the optical sensor.
Embodiment 12: The blender device according to any one of the preceding embodiments, wherein the spectrometer signal comprises at least one of: an absorption signal of an absorption of light of at least one wavelength by the substance; a transmission signal of a transmission of light of at least one wavelength by the substance; an absorption spectrum of the substance over at least one wavelength range; a transmission spectrum of the substance over at least one wavelength range; an optical signal indicative of a ratio of absorption of light of at least two different wavelengths by the substance; an optical signal indicative of a ratio of transmission of light of at least two different wavelengths by the substance.
Embodiment 13: The blender device according to any one of the preceding embodiments, wherein the spectrometer device is configured for measuring at least one spectrum of the substance by using the light source and the optical sensor, wherein the spectrometer device is further configured for generating the at least one spectrometer signal in correspondence with the measured spectrum.
Embodiment 14: The blender device according to any one of the preceding embodiments, further comprising at least one evaluation device configured for evaluating the spectrometer signal and for determining at least one item of information on at least one property of the substance.
Embodiment 15: The blender device according to the preceding embodiment, wherein the item of information is selected from the group consisting of: a content of at least one component of the substance, specifically a content selected from the group consisting of a water content, a sugar content and a nutrient content; a blending state of the substance, specifically a homogeneity of the substance; a density of the substance; a color of the substance.
Embodiment 16: The blender device according to any one of the two preceding embodiments, wherein the evaluation device is further configured for taking the modulation of the spectrometer signal into account for determining the item of information.
Embodiment 17: The blender device according to any one of the three preceding embodiments, wherein the evaluation device is configured for at least one of: a frequency filtering of the spectrometer signal; a lock-in measurement using the spectrometer signal, specifically a lock-in measurement using the spectrometer signal and a frequency of at least one of the periodic movement of the moving part and the periodic movement of the reflecting portion.
Embodiment 18: The blender device according to any one of the four preceding embodiments, wherein the blender device is configured for controlling a blending process of the substance by using the item of information on the at least one property of the substance.
Embodiment 19: The blender device according to the preceding embodiments, wherein the blender device is configured for at least one of: controlling an intensity, specifically a frequency, of the blending process in accordance with the item of information; stopping the blending process when the item of information reaches a predetermined value.
Embodiment 20: The blender device according to any one of the preceding embodiments, wherein the moving part comprises at least one rotating part, wherein the periodic movement of the moving part is a rotating movement.
Embodiment 21: The blender device according to any one of the preceding embodiments, wherein the moving part comprises at least one of: a knife element, a whisk, a dough hook.
Embodiment 22: The blender device according to any one of the preceding embodiments, wherein the moving part is at least partially located in at least one light path of light emitted by the light source, specifically of at least one light beam emitted by the light source and directly or indirectly directed to the optical sensor.
Embodiment 23: The blender device according to any one of the preceding embodiments, wherein the spectrometer device is further configured for measuring at least one reference signal.
Embodiment 24: The blender device according to the preceding embodiment, wherein the reference signal is selected from the group consisting of: a dark signal, specifically a dark signal generated by using sensor signals of the optical sensor during periods of no reflection or no direct reflection of light from the reflecting portion towards the optical sensor; a reference signal generated by detecting light emitted by the light source without interaction of the light with the substance; a reference signal generated by detecting light emitted by the light source and being scattered and/or reflected by the substance; a background signal.
Embodiment 25: The blender device according to any one of the preceding embodiments, wherein the moving part comprises at least one reflecting surface which acts as the reflecting portion.
Embodiment 26: The blender device according to any one of the preceding embodiments, wherein the moving part further comprises at least one mechanical transmission for further adapting the movement of the reflecting portion.
Embodiment 27: The blender device according to any one of the preceding embodiments, wherein a minimum spatial distance between the reflecting portion and the spectrometer device, specifically the light source and/or the optical sensor, is 1 mm to 400 mm, specifically 3 mm to 100 mm, more specifically 5 mm to 50 mm.
Embodiment 28: The blender device according to any one of the preceding embodiments, wherein the blender device is configured for performing at least one calibration process by using light emitted by the light source and modulated by the reflecting portion.
Embodiment 29: The blender device according to the preceding embodiment, wherein the calibration process comprises at least one of: a background calibration; a spectral calibration; an intensity calibration; a dark noise calibration.
Embodiment 30: The blender device according to any one of the preceding embodiments, wherein the blender device further comprises at least one controller for controlling at least one of the spectrometer device and the actuator and optionally the evaluation device.
Embodiment 31: A method of operating the blender device according to any one of the preceding embodiments, the method comprising:
   i.filling at least one substance to be blended in the container of the blender device;
   ii.emitting light by using the light source of the spectrometer device;
   iii. modulating the light emitted by the light source through the periodic movement of the moving part by using the reflecting portion;
   iv. receiving the modulated light by using the optical sensor of the spectrometer device; and
   v.generating at least one spectrometer signal indicative of at least one optical property of the substance.
Embodiment 32: The method according to the preceding embodiment, wherein the method is computer-implemented.

### Short description of the Figures

Further optional features and embodiments will be disclosed in more detail in the subsequent description of embodiments, preferably in conjunction with the dependent claims. Therein, the respective optional features may be realized in an isolated fashion as well as in any arbitrary feasible combination, as the skilled person will realize. The scope of the invention is not restricted by the preferred embodiments. The embodiments are schematically depicted in the Figures. Therein, identical reference numbers in these Figures refer to identical or functionally comparable elements.

In the Figures:
- Figure 1: shows an embodiment of a blender device in a schematic partial cross-sectional view; and
- Figure 2: shows a flow chart of an embodiment of a method of operating a blender device.

### Detailed description of the embodiments

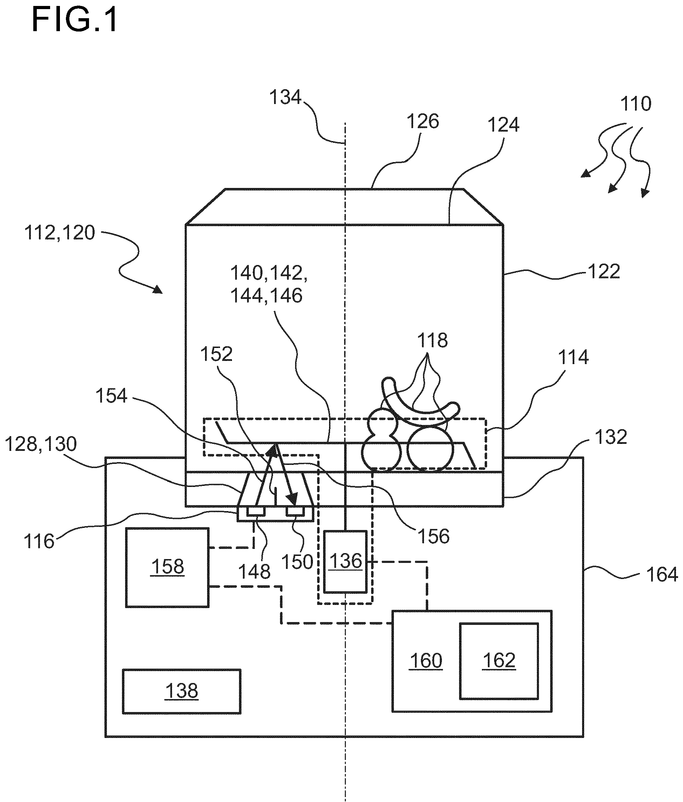

Figure 1 shows an embodiment of a blender device 110 in a schematic partial cross-sectional view. The blender device 110 may specifically be configured for household purposes. As figure 1 indicates, the blender device 110 may be configured for making smoothies. However, it shall be noted that the blender device 110 may also be used for other purposes. The blender device 110 comprises at least one container 112, at least one actuator 114 and at least one spectrometer device 116.

The container 112 is configured for receiving at least one substance 118. As Figure 1 shows, the container 112 may comprise a pot 120 having at least one wall 122 fully or partially enclosing at least one inner space configured for receiving the at least one substance 118 to be blended. The container 112 may comprise an at least mainly cylindrical geometric base body. The container 112 may be fully or partially made of an inert and mechanically robust material, e.g. stainless steel, tempered glass or hard plastic. The container 112 may comprise at least one opening 124 through which it may receive the at least one substance 118, wherein the opening 124 may specifically be sealable. As Figure 1 shows, the container 112 may comprise a lid 126, which may be placed on the opening 124 to seal it. The container 112 may be configured to hold the substance 118 after receiving it and to prevent the substance 118 from escaping. As Figure 1 indicates, through the opening 124, different fruits may be filled into the container 112 where they are to be shredded and mixed for making a smoothie. The lid 126 may then be placed on the opening 124 in order to seal the container 112, so that no substance 118 can escape the container 112 during the blending process. The container 112 may be fixedly integrated into the blender device 110 as an integral part or may be a removable part of the blender device 110 which may be separated from one or more other components of the blender device 110. Thus, the container 112 may be put in the blender device 110 for a blending process and may be removed from of the blender device 110 after completion of the blending process.

The container 112 may further comprise at least one transparent portion 128. The transparent portion 128 may comprise at least one window 130, specifically a watertight and dishwasher safe window 130. The transparent portion 128 may be located in a bottom part 132 of the container. The bottom part 132 of the container may be essentially flat, such as by providing a flat disk for placement of the container 112 on a flat working surface such as a kitchen table. The bottom part may be positioned opposite of the opening 124 of the container 112. The container 112 may specifically be placed within the blender device 110 with the bottom part 132 facing downward. The container 112 may comprise a container axis 134, wherein the transparent portion 128 may be located off-centered with respect to the container axis 134.

As Figure 1 further shows, the actuator 114 may comprise at least one driving element 136, such as a motor, specifically an electrical motor. The blender device 110 specifically may further comprise at least one energy storage device 138, such as at least one battery and/or at least one accumulator, allowing the blender device 110 to work without being permanently connected to an energy source. The at least one energy storage device 138 specifically may be directly or indirectly coupled to the at least one actuator 114, for providing electrical energy to the at least one actuator 114. The energy storage device 138 may also provide electrical energy to further components of the blender device 110.

The actuator 114 comprises at least one moving part 140. The moving part 140 is configured for performing a periodic movement for blending the substance 118 in the container 112. The moving part 140 may be driven by the driving element 136 of the actuator 114. The moving part 140 may be or may comprise at least one rotating part 142. Thus, the periodic movement of the moving part 140 may be a rotating movement. As Figure 1 indicates, the periodic movement may be a circular movement at a regulated angular frequency. The moving part 140 may comprise a knife element 144. The knife element 144 may comprise at least one blade or cutting edge. As Figure 1 shows, the knife element 144 may be or comprise at least one cutter head. The knife element 144 may rotate with high speed in order to blend the substance 118. Alternatively or additionally to the knife element 144, the moving part 140 may also comprise at least one of a whisk, a dough hook.

The moving part 140 of the actuator comprises at least one reflecting portion 146. Specifically, the moving part 140 may comprise at least one reflecting surface which acts as the reflecting portion 146. More specifically, the knife element 144 may comprise at least one reflecting surface. The reflecting portion 146 may have a high reflectivity R of at least 50% of the light produced by the light source, preferably of at least 60% and, more preferably of at least 80%. The moving part 140 may further comprise at least one mechanical transmission for further adapting the movement of the reflecting portion 146, specifically a rotating speed of the reflecting portion 146.

The spectrometer device 116 comprises at least one light source 148 and at least one optical sensor 150. The spectrometer device 116 may at least partially be located outside the container 112. The spectrometer device 116 may be placed underneath the container 112, specifically off-centered with respect to the container axis 134 of the container 112. A minimum spatial distance between the reflecting portion 146 and the spectrometer device 116, specifically the light source 148 and/or the optical sensor 150, may be 1 mm to 400 mm, specifically 3 mm to 100 mm, more specifically 5 mm to 50 mm.

The spectrometer device 116 is configured for generating at least one spectrometer signal indicative of at least one optical property of the substance 118. The spectrometer device 116 is arranged such that the spectrometer signal is modulated by a periodic movement of the reflecting portion 146. The moving part 140 may be at least partially located in at least one light path of light emitted by the light source 148. The reflecting portion 146 may be configured for at least partially reflecting light emitted by the light source 148 towards the optical sensor 150. A direct light path between the light source 148 and the optical sensor 150 may be blocked by at least one blocking element 152 of the blender device 110, such that the light emitted by the light source 148, for reaching the optical sensor 150, has to be reflected by the reflecting portion 146 in order to reach the optical sensor 150. The optical sensor 150 may be configured for detecting light emitted by the light source 148 after interaction with the substance 118 and at least partial reflection by the reflecting portion 146. The reflecting portion 146 may be configured for periodically modulating the light. The transparent portion 128 may be at least partially transparent for light generated by the light source 148. The spectrometer signal may comprise a signal generated by the optical sensor 150.

The spectrometer device 116 may further be configured for measuring at least one reference signal. The reference signal may be selected from the group consisting of: a dark signal, specifically a dark signal generated by using sensor signals of the optical sensor 150 during periods of no reflection or no direct reflection of light from the reflecting portion 146 towards the optical sensor 150; a reference signal generated by detecting light emitted by the light source 148 without interaction of the light with the substance 118; a reference signal generated by detecting light emitted by the light source 148 and being scattered and/or reflected by the substance 118; a background signal. Also, the blender device 110 may be configured for performing at least one calibration process by using light emitted by the light source 148 and modulated by the reflecting portion 146. The calibration process may comprises at least one of: a background calibration; a spectral calibration; an intensity calibration; a dark noise calibration.

The spectrometer device 116 may be configured for at least one of: a reflective measurement; a transmissive measurement; a transflective measurement. As Figure 1 shows, an incident light beam 154 may be emitted by the light source 148 towards the reflecting portion 146. Before reaching the reflection portion 146, the incident light beam 154 may interact with the substance 118 within the container 112. The incident light beam 154 may at least partially be reflected by the substance 118 and/or transmitted through the substance 118 and/or absorbed by the substance 118. At the reflecting portion 146 a reflected light beam 156 may be generated, wherein the reflected light beam 156 may be modulated through the periodic movement of the reflecting portion 146. The reflected light beam 156 may be directed towards the optical sensor 150. Before reaching the optical sensor 150, the reflected light beam 156 may again interact with the substance 118. Thus, the optical sensor 150 may generally detect both light which was reflected by the substance 118 and/or transmitted through the substance 118 in a transflective measurement. The optical sensor 150 may specifically measure a superposition of a reflected and a transmitted light intensity.

The spectrometer device 116 may be configured for measuring at least one spectrum of the substance 118 by using the light source 148 and the optical sensor 150. The spectrometer device 116 may be further configured for generating the at least one spectrometer signal in correspondence with the measured spectrum. Generally, an interaction of light with the substance 118 may be depending on a wavelength of the light and may affect a light intensity of the light. Specifically, an absorption of at least a part of the light by the substance 118 may reduce the light intensity. The spectrometer signal may comprises at least one of: an absorption signal of an absorption of light of at least one wavelength by the substance 118; a transmission signal of a transmission of light of at least one wavelength by the substance 118; an absorption spectrum of the substance 118 over at least one wavelength range; a transmission spectrum of the substance 118 over at least one wavelength range; an optical signal indicative of a ratio of absorption of light of at least two different wavelengths by the substance 118; an optical signal indicative of a ratio of transmission of light of at least two different wavelengths by the substance 118.

The blender device 110 may further comprise at least one evaluation device 158. The evaluation device 158 may be configured for evaluating the spectrometer signal and for determining at least one item of information on at least one property of the substance 118. The evaluation device 158 may comprise at least one processor. Further, the evaluation device 158 may comprise one or more data storage devices, in particular for storing at least one electronic table, in particular at least one look-up table. As Figure 1 shows, the evaluation device 158 may be connected to the spectrometer device 116 via a wire bound and/or a wireless connection. Thus, the spectrometer signal generated by the spectrometer device 116 may be passed on to the evaluation device 158 for determining the item of information. The item of information may be selected from the group consisting of: a content of at least one component of the substance 118, specifically a content selected from the group consisting of a water content, a sugar content and a nutrient content; a blending state of the substance 118, specifically a homogeneity of the substance 118; a density of the substance 118; a color of the substance 118.

The evaluation device 158 may be configured for taking the modulation of the spectrometer signal into account for determining the item of information. The evaluation device 158 may be configured for at least one of: a frequency filtering of the spectrometer signal; a lock-in measurement using the spectrometer signal, specifically a lock-in measurement using the spectrometer signal and a frequency of at least one of the periodic movement of the moving part 140 and the periodic movement of the reflecting portion 146. The blender device 110 may be configured for controlling a blending process of the substance 118 by using the item of information on the at least one property of the substance 118. The blender device 110 may be configured for at least one of: controlling an intensity, specifically a frequency, of the blending process in accordance with the item of information; stopping the blending process when the item of information reaches a predetermined value. Figure 1 may refer to a starting point of the blending process. The blender device 110 may detect that at least one substance 118 was filled into the container 112, wherein a homogeneity and/or a density of the substance 118 may be below a predetermined value. Consequently, the blender device 110 may start a periodic movement of the moving part 140, such as by ramping up a rotating frequency of the knife element 144. When the predetermined value of the homogeneity and/or the density of the substance 118 is detected, the moving part 140 may be stopped.

The blender device 110 may further comprise at least one controller 160 for controlling at least one of the spectrometer device 116 and the actuator 114 and optionally the evaluation device 158. Thus, the controller 160 may be connected to at least one of the spectrometer device 116, the actuator 114 and the evaluation device 158 via a wire bound and/or a wireless connection. The controller 160 may comprise at least one processor. Further, the controller 160 may comprise one or more data storage devices, in particular for storing at least one electronic table, in particular at least one look-up table. The controller 160 may comprise at least one interface 162. A user of the blender device 110 may be able to control the blender device 110 through the controller 160, specifically by using the interface 162. The interface 162 may comprise at least one of a switch, a button and a touch screen. The interface 162 may further comprise at least one display configured for displaying information to the user, such as at least one item of information on at least one property of the substance 118.

The blender device 110 may further comprise at least one housing 164. The parts as shown above may fully or partially be included in the housing 164 of the blender device 110. However, specifically the container 112 and at least a part of the actuator 114 may be outside of the housing 164. Specifically, electronic parts may fully or partially be encased by the housing 164 for protecting these parts from environmental influences.

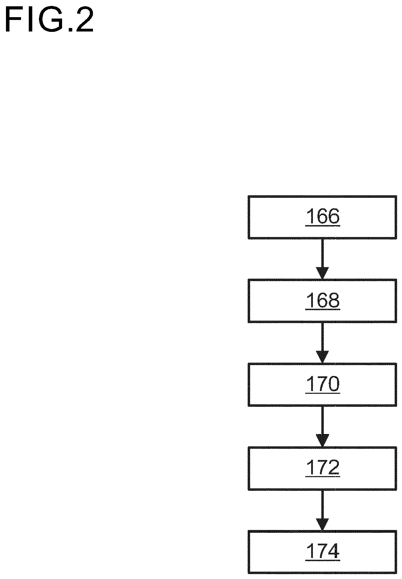

Figure 2 shows a flow chart of an embodiment of a method of operating the blender device 110. The method of operating the blender device 110 comprises the following method steps:
i. (denoted by reference number 166) filling at least one substance 118 to be blended in the container 112 of the blender device 110;
ii. (denoted by reference number 168) emitting light by using the light source 148 of the spectrometer device 116;
iii. (denoted by reference number 170) modulating the light emitted by the light source 148 through the periodic movement of the moving part 140 by using the reflecting portion 146;
iv. (denoted by reference number 172) receiving the modulated light by using the optical sensor 150 of the spectrometer device 116; and
v. (denoted by reference number 174) generating at least one spectrometer signal indicative of at least one optical property of the substance 118.

The method steps may be performed in the given order. It shall be noted, however, that a different order is also possible. Further, one or more of the method steps may be performed once or repeatedly. Further, two or more of the method steps may be performed simultaneously or in a timely overlapping fashion. The method may comprise further method steps which are not listed.

The method may be computer-implemented. Referring to the computer-implemented aspects of the invention, one or more of the method steps or even all of the method steps of the method according to one or more of the embodiments disclosed herein may be performed by using a computer or computer network. Thus, generally, any of the method steps including provision and/or manipulation of data may be performed by using a computer or computer network. Generally, these method steps may include any of the method steps, typically except for method steps requiring manual work.

### List of reference numbers

- 110: blender device
- 112: container
- 114: actuator
- 116: spectrometer device
- 118: substance
- 120: pot
- 122: wall
- 124: opening
- 126: lid
- 128: transparent portion
- 130: window
- 132: bottom part
- 134: container axis
- 136: driving element
- 138: energy storage device
- 140: moving part
- 142: rotating part
- 144: knife element
- 146: reflecting portion
- 148: light source
- 150: optical sensor
- 152: blocking element
- 154: incident light beam
- 156: reflected light beam
- 158: evaluation device
- 160: controller
- 162: interface
- 164: housing
- 166: method step i.
- 168: method step ii.
- 170: method step iii.
- 172: method step iv.
- 174: method step v.

## Claims

1. A blender device (110), specifically for household purposes, comprising:
- at least one container (112) configured for receiving at least one substance (118); and
- at least one actuator (114) comprising at least one moving part (140), wherein the moving part (140) is configured for performing a periodic movement for blending the substance (118) in the container (112);
the blender device (110) further comprising:
- at least one spectrometer device (116), wherein the spectrometer device (116) comprises at least one light source (148) and at least one optical sensor (150), wherein the spectrometer device (116) is configured for generating at least one spectrometer signal indicative of at least one optical property of the substance (118);
wherein the moving part (140) of the actuator (114) comprises at least one reflecting portion (146), and wherein the spectrometer device (116) is arranged such that the spectrometer signal is modulated by a periodic movement of the reflecting portion (146).

2. The blender device (110) according to the preceding claim, wherein the reflecting portion (146) is configured for at least partially reflecting light emitted by the light source (148) towards the optical sensor (150).

3. The blender device (110) according to any one of the preceding claims, wherein the spectrometer device (116) is configured for at least one of: a reflective measurement; a transmissive measurement; a transflective measurement.

4. The blender device (110) according to any one of the preceding claims, wherein the spectrometer device (116) at least partially is located outside the container (112), wherein the container (112) comprises at least one transparent portion (128) being at least partially transparent for light generated by the light source (148).

5. The blender device (110) according to the preceding claim, wherein the transparent portion (128) is located in a bottom part (132) of the container (112), wherein the container (112) comprises a container axis (134), wherein the transparent portion (128) is located off-centered with respect to the container axis (134), wherein the spectrometer device (116) is placed underneath the container (112).

6. The blender device (110) according to any one of the preceding claims, wherein the spectrometer signal comprises at least one of: an absorption signal of an absorption of light of at least one wavelength by the substance (118); a transmission signal of a transmission of light of at least one wavelength by the substance (118); an absorption spectrum of the substance (118) over at least one wavelength range; a transmission spectrum of the substance (118) over at least one wavelength range; an optical signal indicative of a ratio of absorption of light of at least two different wavelengths by the substance (118); an optical signal indicative of a ratio of transmission of light of at least two different wavelengths by the substance (118).

7. The blender device (110) according to any one of the preceding claims, wherein the spectrometer device (116) is configured for measuring at least one spectrum of the substance (118) by using the light source (148) and the optical sensor (150), wherein the spectrometer device is further configured for generating the at least one spectrometer signal in correspondence with the measured spectrum.

8. The blender device (110) according to any one of the preceding claims, further comprising at least one evaluation device (158) configured for evaluating the spectrometer signal and for determining at least one item of information on at least one property of the substance (118).

9. The blender device (110) according to the preceding claim, wherein the item of information is selected from the group consisting of: a content of at least one component of the substance (118), specifically a content selected from the group consisting of a water content, a sugar content and a nutrient content; a blending state of the substance (118), specifically a homogeneity of the substance (118); a density of the substance (118); a color of the substance (118).

10. The blender device (110) according to any one of the two preceding claims, wherein the evaluation device (158) is further configured for taking the modulation of the spectrometer signal into account for determining the item of information.

11. The blender device (110) according to any one of the three preceding claims, wherein the evaluation device (158) is configured for at least one of: a frequency filtering of the spectrometer signal; a lock-in measurement using the spectrometer signal, specifically a lock-in measurement using the spectrometer signal and a frequency of at least one of the periodic movement of the moving part (140) and the periodic movement of the reflecting portion (146).

12. The blender device (110) according to any one of the four preceding claims, wherein the blender device is configured for controlling a blending process of the substance (118) by using the item of information on the at least one property of the substance (118).

13. The blender device (110) according to the preceding claim, wherein the blender device (110) is configured for at least one of: controlling an intensity, specifically a frequency, of the blending process in accordance with the item of information; stopping the blending process when the item of information reaches a predetermined value.

14. The blender device (110) according to any one of the preceding claims, wherein the moving part (140) comprises at least one of: a knife element (144), a whisk, a dough hook.

15. A method of operating the blender device (110) according to any one of the preceding claims, the method comprising:
i. filling at least one substance (118) to be blended in the container (112) of the blender device (110);
ii. emitting light by using the light source (148) of the spectrometer device (116);
iii. modulating the light emitted by the light source (148) through the periodic movement of the moving part (140) by using the reflecting portion (146);
iv. receiving the modulated light by using the optical sensor (150) of the spectrometer device (116); and
v. generating at least one spectrometer signal indicative of at least one optical property of the substance (118).
